# EUROPÄISCHE PATENTSCHRIFT

(11) **EP 0 862 700 B1**
(45) Veröffentlichungstag und Bekanntmachung des Hinweises auf die Patenterteilung: **22.12.1999**
(21) Anmeldenummer: 96946002.1
(22) Anmeldetag: 19.11.1996
(51) Int. Cl.: F16C 39/06

(54) **MAGNETISCHES LAGER**
MAGNETIC BEARING
PALIER MAGNETIQUE

(30) Priorität: 24.11.1995 DE 19543745
(43) Veröffentlichungstag der Anmeldung: 09.09.1998
(73) Patentinhaber: FORSCHUNGSZENTRUM JÜLICH GMBH, 52425 Jülich (DE)
(72) Erfinder: FREMEREY, Johan, K., D-53129 Bonn (DE); POLACHOWSKI, Stephan, D-52428 Jülich (DE); REIFF, Heinrich, D-52382 Niederzier (DE)
(86) Internationale Anmeldenummer: DE9602229
(87) Internationale Veröffentlichungsnummer: WO9719273

(56) Entgegenhaltungen:
- EP-A- 0 396 849
- DE-A- 1 441 194
- DE-A- 2 314 436
- FR-A- 2 253 950
- PATENT ABSTRACTS OF JAPAN vol. 9, no. 282 (M-428) [2005] , 9.November 1985 & JP 60 125414 A (HITACHI), 4.Juli 1985,
- L.E. MacHattie, "The Production of High Rotational Speed", The Review of Scientific Instruments, Vol. 12, No. 9, September 1941, S. 429 - 435
- J.W. Beams, "Double Magnetic Suspension", The Review of Scientific Instruments, Vol. 34, No. 10, Oktober 1963, S. 1071 - 1074

## Beschreibung

Die Erfindung betrifft ein magnetisches Lager zur berührungslosen Abstützung eines beweglichen, vorzugsweise rotierenden Körpers gegenüber einem feststehenden Teil. Im folgenden wird der bewegliche Körper "Rotor", der feststehende Teil "Stator" genannt. Rotor und Stator weisen magnetische Bereiche auf, entsprechend Rotor- bzw. Statormagnet bezeichnet, die an mindestens einem Lagerspalt des magnetischen Lagers sich in geringem Abstand gegenüberstehen. Der Statormagnet ist am Stator derart befestigt, daß er relativ zum Stator im wesentlichen in einer Ebene, die parallel zu sich am Lagerspalt gegenüberliegenden Magnetflächen von Rotor- und Statormagnet ausgerichtet ist, frei schwingen kann.

Magnetische Lager dieser Art sind bekannt. In einer von McHattie beschriebenen magnetischen Lagerung, s.Review of Scientific Instruments, vol.12, S.429/435, 1941, mit der kleine schnell rotorierende Stahlzylinder berührungslos gelagert werden und die mit einer axial aktiven elektromagnetischen Stabilisierung ausgerüstet sind, werden radiale Schwingungen des gelagerten Rotors durch berührungslose magnetische Ankopplung auf eine radial beweglich montierte Nadel übertragen und durch Einbettung der Nadel in Öl gedämpft. Eine Öldämpfung wird auch von J.W.Beams in "Double Magnetic Suspension", Review of Scientific Instruments, vol. 34, S.1071/1074, 1963, angegeben.

Nachteilig bei diesem Dämpfungssystem sind die erforderliche Kapselung des beweglich montierten Statorteils zur Vermeidung von Ölverlusten sowie das durch die Kapselung notwendige zusätzliche Bauvolumen der Vorrichtung und die dadurch bedingten relativ hohen Fertigungskosten. Als Bestandteil von massengefertigten Magnetlagersystemen, die in unmittelbarer Konkurrenz zu kostenoptimierten wälzgelagerten Systemen treten sollen, insbesondere beim Einsatz solcher Lager für Textilspindeln und -zentrifugen, erscheint der Öldämpfer allein wegen seines Fertigungsaufwandes ungünstig. Ferner entsprechen die Eigenschaften eines Öldämpfers aufgrund der Umwälzung eines Teils der Ölmasse nur bedingt den Eigenschaften eines idealen Schwingungsdämpfers mit Geschwindigkeits proportionaler Dämpfkraft, denn durch die Ölumwälzung werden neben der reinen Dämpfkraft auch Massen-Beschleunigungskräfte wirksam.

Aufgabe der Erfindung ist die Ausstattung eines magnetischen Lagers mit einem Dämpfsystem, das zu einem geringen Bauvolumen führt und bei dem das Umwälzen und Mitbewegen erheblicher Massen bei der Dämpfung weitgehend reduziert werden kann. Darüber hinaus soll das magnetische Lager auch kostengünstig herstellbar sein.

Diese Aufgabe wird bei einem magnetischen Lager der eingangs genannten Art durch die im Patentanspruch 1 angegebenen Merkmale gelöst. Danach ist zur Dämpfung der Schwingungsbewegung des Statormagneten, der in einer Ebene parallel zu den Magnetflächen des Rotor- und Statormagneten schwingt, eine mechanische Reibvorrichtung vorgesehen. Die Reibvorrichtung weist bevorzugt zwei kraftschlüssig miteinander in Berührung stehende Berührungsflächen auf, deren Flächennormalen senkrecht zur Schwingungsebene des Statormagneten orientiert sind, Patentanspruch 3. Bei einer Auslenkung des Statormagneten gleiten diese Berührungsflächen aufeinander und dämpfen die freie Schwingungsbewegung des Statormagneten um so mehr, je stärker die Reibkraft zwischen den Berührungsflächen eingestellt ist, die das Aufeinandergleiten der Berührungsflächen bestimmt.

Vorteilhaft ist es, eine der beiden Berührungsflächen mit einer glatten Oberfläche, die andere Berührungsfläche mit einer rauhen Oberfläche auszustatten, Patentanspruch 4. Die glatte Oberfläche kann von festem, insbesondere metallischem Material ausgebildet sein, die rauhe Oberfläche vorzugsweise aus Gewebe, Filz oder anderen aus Fasern aufgebautem nachgiebigen Material bestehen.

Zum Zwecke der Einstellung eines für den jeweiligen Anwendungsfall optimierbaren Dämpfungsgrades ist die Reibkraft zwischen den Berührungsflächen regulierbar, Patentanspruch 5. Hierzu läßt sich insbesondere die Andruckkraft zwischen den Berührungsflächen variieren.

Nach Patentanspruch 6 ist es vorgesehen, die rauhe Oberfläche mit dem Statormagneten zu verbinden, und zur Ausbildung der glatten Oberfläche eine ortsfest am Stator befestigte mechanische Feder zu verwenden, die sich im wesentlichen in Richtung der Flächennormalen der Berührungsfläche federnd bewegt. Je größer der von der Feder auf die glatte Oberfläche ausgeübte Druck ist, um so höher ist die Andruckkraft zwischen den Berührungsflächen. Da mit der Andruckkraft auch die Reibkraft steigt, erhöht sich mit steigendem Federdruck die erreichte Dämpfung der Bewegung des Statormagneten. Bei einstellbarer Vorspannung der Feder ist die Reibkraft und somit die Dämpfung anpaßbar, Patentanspruch 7.

Zweckmäßig ist in einfachster Weise zur Einstellung des Druckes zwischen den Berührungsflächen eine Blattfeder eingesetzt, Patentanspruch 8. Nach Patentanspruch 9 läßt sich die Vorspannung der Blattfeder durch entsprechenden Druck auf das federnde Ende der Blattfeder erzeugen.

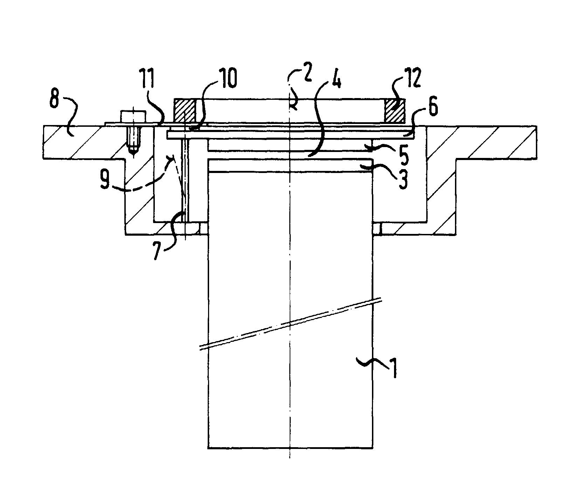

Die Erfindung und weitere Ausbildungen der Erfindung werden nachfolgend anhand eines in der Zeichnung schematisch wiedergegebenen Ausführungsbeispiels näher erläutert.

In der Zeichnung ist ein Längsschnitt eines rotationssymetrischen magnetischen Lagers dargestellt. Ein hohlzylindrisch ausgebildeter Rotor 1 mit senkrecht angeordneter Rotationsachse 2 ist an seinem oberen Ende mit einem ringförmigen, im Ausführungsbeispiel permanentmagnetischem Rotormagnet 3 versehen. Der Rotormagnet 3 ist an einem horizontal verlaufenden Lagerspalt 4 in engem Abstand einem Statormagneten 5 gegenüber angeordnet, der ebenfalls ringförmig ausgebildet ist und die gleichen Abmessungen wie der Rotormagnet 3 aufweist. Im Ausführungsbeispiel besteht der Statormagnet 5 aus permanentmagnetischem Material. Durch die anziehende magnetische Kraftwirkung zwischen Rotormagnet 3 und Statormagnet 5 wird die Gewichtskraft des Rotors 1 weitgehend kompensiert, in der schematischen Zeichnung ist eine zusätzlich erforderliche leichte Abstützung des Rotors nicht dargestellt.

Der Statormagnet 5 ist an einer Plattform 6 angebracht, die auf biegeelastischen Stützen 7 am ortsfesten Stator 8 in vertikaler Richtung starr, in horizontaler Ebene dagegen nachgiebig schwingbar montiert ist. Für die biegeelastischen Stützen 7 werden im Ausführungsbeispiel am Stator 8 einseitig eingespannte Metallstifte verwendet, deren dem Einspannende entgegengesetzes Ende die Plattform 6 trägt, so daß die Plattform bei einer Bewegung in horizontale Ebene frei ausschwingen kann. Dabei werden die Metallstifte federnd ausgelenkt, in der Zeichnung ist die Bewegung der Stütze 7 als Biegelinie 9 schematisch markiert.

Die Plattform 6 ist mit drei Stützen 7 am Stator 8 abgestützt, im in der Zeichnung dargestellten Längsschnitt des magnetischen Lagers ist eine dieser Stützen wiedergegeben. Die die Stützen bildenden Metallstifte sind radial zur Stiftachse in allen Richtungen federn beweglich, so daß die Plattform 6 in horizontaler Ebene, die parallel zu den Magnetflächen von Rotor- und Statormagneten am horizontalen Lagerspalt 4 ausgerichtet ist, in jeder Richtung frei schwingen kann.

Die Plattform 6 trägt auf ihrer dem Statormagneten 5 abgewandten Fläche Filzscheiben 10. Im Ausführungsbeispiel sind drei solcher Filzscheiben auf der Oberseite der Plattform 6 aufgeklebt, im in der Zeichnung dargestellten Längsschnitt des magnetischen Lagers ist nur eine dieser Filzscheiben sichtbar. Die Filzscheiben 10 berühren jeweils eine glatte Fläche einer Feder, im Ausführungsbeispiel die Fläche einer der breiten Seiten einer Blattfeder 11. Die Berührungsflächen von Filzscheiben und zugehörigen Blattfedern weisen Flächennormalen auf, die senkrecht zur horizontalen Schwingsebene des Statormagneten 5 orientiert sind. Die Blattfedern 11 sind am Stator 8 derart befestigt, daß sie mit ihren freien federnden Enden in Richtung der Rotationsachse 2 auf die Filzscheiben drücken und den Berührungsdruck zwischen glatter Oberfläche der Blattfedern und rauher Oberfläche der Filzscheiben bestimmen. Im Ausführungsbeispiel ist zur Verstärkung des Federdrucks auf das freie Ende der Blattfeder ein Metallring 12 aufgelegt, dessen Gewicht zur Einstellung und Anpassung des Berührungsdruckes an die im Einzelfall benötigte Dämpfkraft variierbar ist. Die Reibkraft zwischen den Berührungsflächen läßt sich so regulieren.

Ein derart ausgebildetes magnetisches Lager ist in achsialer Richtung infolge des im Lagerspalt 4 wirkenden permanentmagnetischen Feldes im wesentlichen stabil. Radiale Schwingungen des Rotors während seiner Rotation werden durch mechanische Reibung aufgefangen. So wird bei einer radialen Auslenkung des Rotors 1 relativ zu seiner Rotationsachse 2 wegen der magnetischen Kopplung zwischen dem Rotormagneten 3 und dem Statormagneten 5 die Plattform 6 in horizontaler Ebene des Lagerspalts 4 bewegt. Radiale Schwingungen des Rotors 1 übertragen sich auf die Plattform 6. Bei einer solchen Bewegung der Plattform 6 verschieben sich auch die Filzscheiben 10 gegenüber den glatten Flächen der Blattfedern 11, je nach Berührungsdruck zwischen den Filzscheiben 10 und den Blattfedern 11 werden die gleitenden Bewegungen jedoch gebremst und somit die Schwingungen des Rotors 1 gedämpft.

Das Bauvolumen der als Dämpfvorrichtung wirkenden Reibvorrichtung, die aus den Lagerteilen Plattform 6, Filzscheiben 10 und Blattfedern 11 mit gegebenenfalls aufgelegtem Metallring 12 besteht, ist entsprechend gering. Durch Erzeugung des Berührungsdrucks mittels der Feder, der im Ausführungsbeispiel durch Vorgabe des Gewichts des Metallrings 12 auch variierbar ist, und den geringen Aufwand für die die Dämpfung bewirkenden Teile, Filzscheiben 10 und Blattfedern 11, ist die Reibvorrichtung, wie sie im Ausführungsbeispiel wieder gegeben ist, besonders kostengünstig herstellbar. Die Masse der Teile der Reibvorrichtung ist gegenüber der wirksamen Dämpfkraft im Verhältnis zu bisher bekannten Öldämpfern vernachlässigbar klein.

### Bezugszeichenliste

- Rotor: 1
- Rotationsachse: 2
- Rotormagnet: 3
- Lagerspalt: 4
- Statormagnet: 5
- Plattform: 6
- Stützen: 7
- Stator: 8
- Biegelinie: 9
- Filzscheiben: 10
- Blattfeder: 11
- Metallring: 12

## Patentansprüche

1. Magnetisches Lager zur berührungslosen Abstützung eines beweglichen, vorzugsweise rotierenden Körpers, nachfolgend Rotor (1) genannt, gegenüber einem feststehenden Teil, nachfolgend Stator (8) genannt, umfassend einen Rotor (1) und einen Stator (8) und mit mindestens einem Lagerspalt (4) zwischen Rotor und Stator, an welchem sich magnetische Bereiche von Rotor und Stator, entsprechend als Rotor- bzw. Statormagnet (3, 5) bezeichnet, in geringem Abstand gegenüberstehen, wobei der Statormagnet am Stator im wesentlichen in einer Ebene frei schwingbar befestigt ist, die parallel zu sich am Lagerspalt (4) gegenüberstehenden Magnetflächen von Rotor- und Statormagnet (3, 5) ausgerichtet ist, **dadurch gekennzeichnet,** daß zwischen Stator (8) und Statormagnet (5) zur Dämpfung der Schwingbewegung des Statormagneten eine mechanische Reibvorrichtung (6, 10, 11) angeordnet ist.

2. Magnetisches Lager nach Anspruch 1, **dadurch gekennzeichnet,** daß der Statormagnet (5) am Stator (8) mittels einer biegeelastischen Stütze (7) abgestützt ist, die normal zum Lagerspalt (4) starr, in einer parallel zum Lagerspalt verlaufenden Schwingebene nachgiebig federnd montiert ist.

3. Magnetisches Lager nach Anspruch 1 oder 2,**dadurch gekennzeichnet,** daß die mechanische Reibvorrichtung (6, 10, 11) zwei kraftschlüssig miteinander in Berührung stehend Berührungsflächen (10, 11) aufweist, deren Flächennormalen senkrecht zur Schwingungsebene des Statormagneten (5) orientiert sind.

4. Magnetisches Lager nach Anspruch 3, **dadurch gekennzeichnet, daß** eine der Berührungsflächen mit einer glatten Oberfläche (11), die andere mit einer rauhen Oberfläche (10) ausgestattet ist.

5. Magnetisches Lager nach einem der vorhergehenden Ansprüche, **dadurch gekennzeichnet, daß** die Reibkraft zwischen den Berührungsflächen (10,11) mit der Reibvorrichtung einstellbar ist.

6. Magnetisches Lager nach Anspruch 5, **dadurch gekennzeichnet daß** die rauhe Oberfläche mit dem Statormagneten (5) fest verbunden ist, und die glatte Oberfläche von einer ortsfest am Stator (8) befestigten Feder (11) ausgebildet ist, die sich im wesentlichen in Richtung der Flächennormalen der Berührungsfläche nachgiebig federnd bewegt.

7. Magnetisches Lager nach einem der Ansprüche 5 oder 6, **dadurch gekennzeichnet, daß** die Reibkraft durch einstellbare Vorspannung der Feder (11) regulierbar ist.

8. Magnetisches Lager nach einem der vorhergehenden Ansprüche, **dadurch gekennzeichnet, daß** eine Blattfeder (11) eingesetzt ist.

9. Magnetisches Lager nach Anspruch 8, **dadurch gekennzeichnet, daß** die Vorspannung der Blattfeder (11) durch Druck auf deren federndes Ende erzeugt wird.

## Claims

1. Magnetic bearing for providing contact-free support for a moving body, preferably one that rotates, referred to below as the rotor (1), relative to a stationary part, referred to below as the stator (8), comprising a rotor (1) and a stator (8) and having at least one bearing gap (4) between the rotor and the stator, on which gap magnetic areas of the rotor and the stator, correspondingly designated the rotor magnet and stator magnet respectively (3, 5), are set a short distance opposite one another, the stator magnet being attached to the stator so as to be able to vibrate freely in essentially one plane which is orientated parallel to mutually opposed magnetic surfaces of the rotor magnet and the stator magnet (3, 5) across the bearing gap (4), characterised in that a mechanical friction mechanism (6, 10, 11) is arranged between the stator (8) and the stator magnet (5) to damp the oscillating movement of the stator magnet.

2. Magnetic bearing according to claim 1, characterised in that the stator magnet (5) rests on the stator (8) by means of a non-rigid stay (7) which is rigidly mounted normal to the bearing gap (4), so as to be flexibly resilient in an oscillation plane extending parallel to the bearing gap.

3. Magnetic bearing according to claim 1 or 2, characterised in that the mechanical friction mechanism (6, 10, 11) has two contact surfaces (10, 11) which are in non-positive contact with one another, the standard normals of which are orientated perpendicularly to the oscillation plane of the stator magnet (5).

4. Magnetic bearing according to claim 3, characterised in that one of the contact surfaces is given a smooth surface (11), and the other a rough surface (10).

5. Magnetic bearing according to any of the preceding claims, characterised in that the friction force between the contact surfaces (10, 11) can be adjusted with the friction mechanism.

6. Magnetic bearing according to claim 5, characterised in that the rough surface is permanently joined to the stator magnet (5), and the smooth surface is in the form of a spring (11) which is fixedly attached to the stator (8) and which moves in a flexibly resilient manner essentially in the direction of the standard normal to the contact surface.

7. Magnetic bearing according to either of claims 5 or 6, characterised in that the friction force can be regulated by adjustable initial tensioning of the spring (11).

8. Magnetic bearing according to any of the preceding claims, characterised in that a leaf spring (11) is used.

9. Magnetic bearing according to claim 8, characterised in that the initial tension of the leaf spring (11) is generated by pressure on the resilient end thereof.

## Revendications

1. Palier magnétique pour soutenir sans contact un élément mobile, de préférence tournant, appelé dans ce qui suit rotor (1), par rapport à une pièce fixe, appelée dans ce qui suit stator (8), comprenant un rotor (1) et un stator (8) et comportant au moins un interstice (4) de palier entre le rotor et le stator sur lequel se font face à petite distance des zones magnétiques du rotor et du stator, désignés par conséquent comme aimant (3) rotorique et aimant (5) statorique, l'aimant statorique étant fixé au stator de manière à pouvoir osciller librement sensiblement dans un plan qui est parallèle à des surfaces magnétiques de l'aimant (3) rotorique et de l'aimant (5) statorique qui se font face sur l'interstice (4) de palier, caractérisé en ce qu'il est monté entre le stator (8) et l'aimant (5) statorique un dispositif (6, 10, 11) de frottement mécanique pour amortir le mouvement d'oscillation de l'aimant statorique.

2. Palier magnétique suivant la revendication 1, caractérisé en ce que l'aimant (5) statorique est soutenu sur le stator (8) au moyen d'un soutien (7) élastique en flexion qui est monté de manière rigide perpendiculairement à l'interstice (4) de palier et de manière à céder élastiquement dans un plan d'oscillation s'étendant parallèlement à l'interstice de palier.

3. Palier magnétique suivant la revendication 1 ou 2, caractérisé en ce que le dispositif (6, 10, 11) de frottement mécanique comporte deux surfaces (10, 11) de contact, qui sont en contact l'une avec l'autre par coopération de force et dont les normales aux surfaces sont orientées perpendiculairement au plan d'oscillation d'éléments (5) statoriques.

4. Palier magnétique suivant la revendication 3, caractérisé en ce que l'une des surfaces de contact est munie d'une surface (11) lisse, l'autre surface de contact étant munie d'une surface (10) rugueuse.

5. Palier magnétique suivant l'une des revendications précédentes, caractérisé en ce que la force de frottement entre les surfaces (10, 11) de contact peut être réglée par le dispositif de frottement.

6. Palier magnétique suivant la revendication 5, caractérisé en ce que la surface rugueuse est reliée de manière fixe à l'aimant (5) statorique, et la surface lisse est formée par un ressort (11), fixé à poste fixe au stator (8), qui se déplace de manière à céder élastiquement sensiblement dans la direction de la normale à la surface de contact.

7. Palier magnétique suivant l'une des revendications 5 ou 6, caractérisé en ce que la force de frottement peut être réglée par la précontrainte réglable du ressort (11).

8. Palier magnétique suivant l'une des revendications précédentes, caractérisé en ce que l'on utilise un ressort (11) à lames.

9. Palier magnétique suivant la revendication 8, caractérisé en ce que la précontrainte du ressort (11) à lames est produite par pression sur son extrémité élastique.
